# EUROPEAN PATENT APPLICATION

(11) **EP 1 841 240 A1**
(43) Date of publication of application: **03.10.2007**
(21) Application number: 06075712.7
(22) Date of filing: 28.03.2006
(51) Int. Cl.: H04N 17/00, H04N 7/50

(54) **Method of testing transmission of compressed digital video for IPTV**

(71) Applicant: Koninklijke KPN N.V., 2516 CK The Hague (NL)
(72) Inventor: Beerends, John G., 4585 PG Hengstdijk (NL); Vugt, Jeroen, 2518 VD The Hague (NL); Bangma, Menno Remco, 2632 DG Nootdorp (NL)
(74) Representative: Wuyts, Koenraad Maria

(57) **Abstract**

The invention relates to a digital video test sequence (1) comprising an intra coded picture (I) and a plurality of predicted pictures (P,B) following said intra coded picture. Each of said intra coded picture and predicted pictures comprises a luminance component (Y) and two chrominance components (Cr, Cb). A variation in at least one of the chrominance components between at least two successive pictures is uncorrelated with a variation in the luminance component between said successive pictures for at least a portion of a display panel (21) on which said pictures are to be displayed. The video test sequence can be used in detecting packet loss for IPTV data connections.

## Description

### FIELD OF THE INVENTION

In general, the invention relates to the field of testing a digital data connection. More specifically, the invention relates to the field of evaluating packet loss during communication over a digital data connection by means of a digital video test sequence.

### BACKGROUND OF THE INVENTION

Within the next few years, multiple suppliers will offer television via xDSL data connections. Such services are generally known as IPTV. With IPTV, pictures on a display panel are built from data packets received by a decoder over the xDSL data connection.

IPTV is very sensitive to the quality of the data connection. Noise and too far a distance from a transmitting end may significantly reduce the quality of the picture displayed on the display panel. However, the loss of data packets between the transmitting end and the decoder provides for the most detrimental reduction in quality of the picture, since packet loss results in a disturbed pictures. As an indication, the forum concerned with Digital Video Broadcasting (DVB-forum) prescribes a maximum of one noticeable artefact per hour.

It is known in the art to provide dedicated devices to measure packet loss over data connections. However, these devices are complicated and may only be operated by trained experts. Only these experts are capable of determining the quality of the data connection by using these dedicated devices.

There exists a need in the art for a less complicated way of testing the quality of a data connection for use in IPTV services.

### SUMMARY OF THE INVENTION.

A digital video test sequence is proposed that comprises an intra coded picture and a plurality of predicted pictures following said intra coded picture. Each of said intra coded picture and predicted pictures comprises a luminance component and two chrominance components. A variation in at least one of the chrominance components between at least two successive pictures is uncorrelated with a variation in the luminance component between said successive pictures for at least a portion of a display panel on which said pictures are to be displayed.

Furthermore, a method of testing a digital data connection between a transmitting end and a receiving end of said data connection is proposed. The method involves transmitting a digital video test sequence over said data connection from said transmitting end to said receiving end of said data connection. The digital video test sequence comprises an intra coded picture and a plurality of predicted pictures following said intra coded picture. Each of said intra coded picture and predicted pictures comprises a luminance component and two chrominance components. A variation in at least one of the chrominance components between at least two successive pictures is uncorrelated with a variation in the luminance component between said successive pictures for at least a portion of a display panel on which said pictures are to be displayed.

Still further, a system is proposed that is arranged for testing a digital data connection between a transmitting end and a receiving end of said data connection. The system is arranged for transmitting a digital video test sequence over said data connection from said transmitting end to said receiving end of said data connection. The digital video test sequence comprises an intra coded picture and a plurality of predicted pictures following said intra coded picture. Each of said intra coded picture and predicted pictures comprises a luminance component and two chrominance components. A variation in at least one of the chrominance components between at least two successive pictures is uncorrelated with a variation in the luminance component between said successive pictures for at least a portion of a display panel on which said pictures are to be displayed.

A picture on a display panel is typically built from a plurality of data packets transmitted over a data connection. If one of the packets is lost between the transmitting end and the receiving end (the decoder), insufficient information is available to display the entire new picture on the display panel. In this situation, the decoder will try to 'repair' the picture by displaying a part of the preceding picture or a part from adjacent macro blocks to fill in the gap in the new picture associated with the lost data packet. The motion of the part of the preceding picture is predicted by evaluating the motion of the parts of the picture surrounding the missing part.

To provide an encoded video sequence, typically a transformation is made from the primary colours of the picture to a luminance component Y and two colour difference components Cb and Cr. These colour difference components are also referred to as chrominance components. In a conventional video sequence comprising a plurality of pictures, there exists a correlation between the luminance component Y and the chrominance components Cb and Cr for each picture.

The invention is based on the insight that in encoded video sequences, the prediction of a picture from a preceding picture (field or frame) is performed solely on the basis of the luminance component of the picture. By providing an encoded video sequence over a data connection, wherein the luminance component and the chrominance components of a picture are uncorrelated, packet loss over the data connection will be visible on the display panel as a part with a colour difference as compared to the remaining part of the display panel. In other words, the repair strategies of the decoder are used to visualize the packet loss. The display panel part with the colour difference is indicative of a packet loss, associated with said part, over the data connection. Loss of only a single packet may already be clearly visible on the display panel. Consequently, by transmitting the video sequence over the data connection, the quality of the data connection can be simply tested by looking at the display panel showing the pictures of the video sequence.

In an embodiment of the invention, the first picture of the test sequence is the intra coded picture and the predicted pictures are free of intra coded information. This embodiment is advantageous in that the packet loss will remain visible on the display panel, since no full refreshment of the picture will occur after displaying the intra coded picture. Consequently, the person assessing the quality of the data connection may simply switch on the display panel and come back whenever he desires to evaluate the result.

In an embodiment of the invention, each of the intra coded picture and plurality of predicted pictures comprises a plurality of blocks of pixels forming, respectively, the intra coded pictured and predicted pictures on the display panel. The predicted picture is established by a prediction of substantially all blocks of a preceding picture. This embodiment has the advantage that each packet loss will be visible on the display panel. It will be clear to the skilled person that, whenever loss of a packet influences more than one block of pixels on the display panel, it is not necessary that all blocks of the new picture are established by prediction on the basis of all of the blocks of the preceding picture.

In an embodiment of the invention, the variation of the luminance component is zero and the variation of said chrominance components is non-zero. A video sequence with a static luminance component can easily be encoded by an encoder that uses the variation in the luminance component (that is absent in this embodiment, i.e. zero motion) for motion prediction of the next picture. The chrominance components are then encoded as chrominance difference signals. Preferably, the chrominance components of said successive pictures are alternating between two values (preferably, a maximum variation between these values is used) since then loss of a data packet on the data connection is clearly visible on the display panel by a significant colour difference of the part associated with the lost packet.

In an embodiment of the invention, the method involves receiving the video test sequence at a receiving end of the data connection and displaying the video test sequence on the display panel at the receiving end. The pictures are evaluated to observe errors in transmitting of said video test sequence. This method is advantageous in that customers may themselves evaluate the quality of the data connection with their decoder.

In an embodiment of the invention, the method further involves assessing the area on the display panel on which said pictures are displayed incorrectly with regard to said variations of said luminance component and said chrominance components between successive pictures. The area is correlated with a number of transmitting errors, i.e. packet loss, over the digital data connection. By assessing the area of the display panel that shows incorrect pictures, a quantitative measure can be obtained for the quality of the data connection.

The digital data connection may be a connectionless network. The risk of packet loss is highest in such networks.

The invention also relates to a broadcast test channel arranged for transmitting the digital video test sequence as discussed above. The broadcast test channels allows consumers to evaluate the data connection at any time they desire to do so.

The invention also relates to a server arranged for broadcasting, multicasting and/or unicasting the digital video test sequence as discussed above. A customer may retrieve the digital test sequence from the server to test the quality of his data connection.

The invention also relates to an encoder device arranged for composing the digital video test sequence discussed above, wherein a first picture of said sequence is an intra coded picture and all subsequent pictures are predicted pictures. Each predicted picture is free of intra coded information. The chrominance variations are then encoded solely on the basis of the difference between successive pictures and the video sequence will not erase a part on the display panel corresponding with a packet loss over the data connection. The resulting video sequence can be predicted easily by the decoder, by ensuring that the luminance variation is zero (no motion) or substantially zero (slow motion) between successive pictures.

It should be noted that the above defined embodiments, and aspects thereof, may be combined.

The invention will be further illustrated with reference to the attached drawings, which schematically show a preferred embodiment according to the invention. It will be understood that the invention is not in any way restricted to this specific and preferred embodiment.

### BRIEF DESCRIPTION OF THE DRAWINGS

In the drawings:
FIGS. 1A and 1B schematically illustrate, respectively, a video sequence of the prior art and according to an embodiment of the invention;
FIG. 2 illustrates a system comprising a data connection to be tested with the video sequence of FIG. 1B, and
FIGS. 3A-3C schematically illustrate a display panel displaying a video test sequence transmitted over the data connection of FIG. 2.

### DETAILED DESCRIPTION OF THE DRAWINGS

Digital video sequences comprise a series of moment pictures (frames or fields). The display panel for displaying the video sequence comprises multiple points on a lattice, which are called pixels. Each picture comprises digital data corresponding to the pixels, and each digital data indicates the colour, brightness, or gradation value of the corresponding pixel. Pixels may be grouped in blocks of pixels, also referred to as macro blocks. The digital video sequence has a form of the bit sequence produced by compressing the original video data.

The known international standards relating to the video are (i) MPEG-2 (MPEG: moving picture experts group) and MPEG-4 based on ISO (international organization for standardization) and IEC (international electrotechnical commission) which are international standardizing organizations, that is, MPEG-2 is defined as ISO/IEC-13818, and MPEG-4 is defined as ISO/IEC-14496, and (ii) H.261 and H263 based on ITU (international telecommunication union) recommendation, among others. The skilled person is assumed to be familiar with the above standards. A short summary of the MPEG compression of digitised pictures is provided in US 6,545,727.

As an example of the video data coding methods used in the international standards, the interframe prediction coding method is known. In this method, differences between two pictures which are close to each other are encoded and transmitted, and in the receiving side, only the difference is decoded and is added to a picture which has already been decoded. Statistically, such adjacent pictures tend to include the same objects or backgrounds; that is, in most cases, the adjacent pictures resemble each other and have only slight differences. Therefore, data can be compressed by actually encoding only such a slight difference.

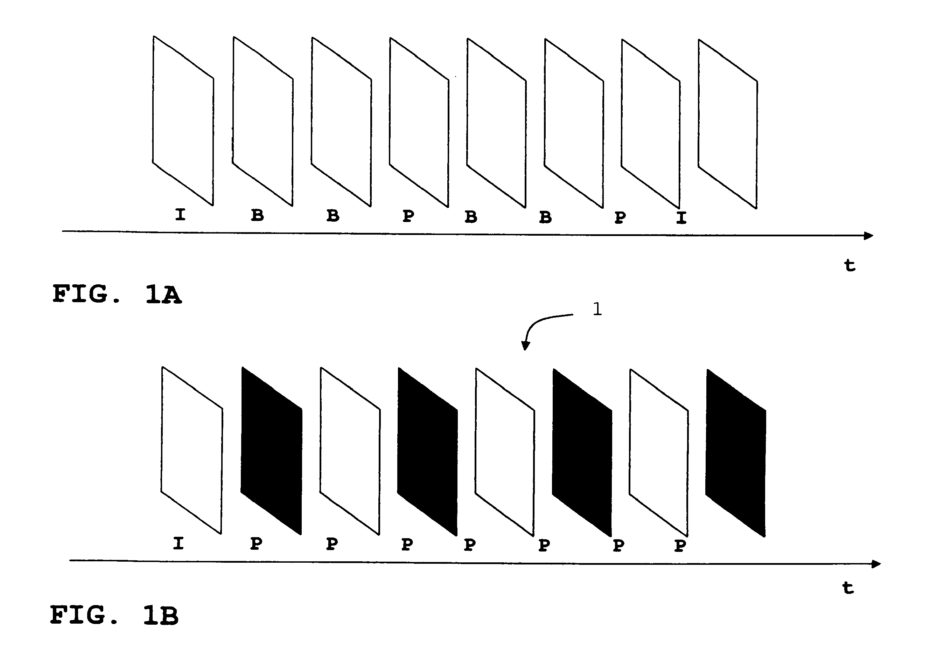

FIG. 1A shows an example of a conventional video sequence comprising I-pictures (Intra Coded Frame or Field), B-pictures (Bi-directionally Predicted Frame or Field) and P-pictures (Predicted Frame or Field). The I-pictures are coded in a fully independent mode. The P-pictures are coded with respect to a preceding I- or P-picture in the sequence. The B-pictures are coded with respect to two pictures of the I- or P-kind, which are the preceding one and the following one in the video sequence. The order of the pictures in the sequence corresponds to the order in which the pictures are displayed on a display panel. Since a picture may comprise one or more errors, the prediction mechanism may result in a propagation of the error. In order to avoid such a propagation, the conventional video sequence has several I-pictures to refresh the entire picture.

As already mentioned in the introduction, for each picture a transformation is made from the primary colours of the picture to a luminance component or signal Y and two colour difference components or signals Cb and Cr. The colour difference components are also referred to as chrominance components. In a conventional video sequence comprising a plurality of pictures, there exists a correlation between the luminance component Y and the chrominance components Cb and Cr for each picture I, P, B.

FIG. 1B illustrates an encoded video sequence 1 according to an embodiment of the invention. The digital video sequence 1 comprises an intra coded picture I and a plurality of predicted pictures P following the intra coded picture I. Each of the intra coded picture I and predicted pictures P comprise a luminance component Y and two chrominance components Cb, Cr. The variation in at least one of the chrominance components Cb, Cr between at least two successive pictures (I-P or P-P)is controlled such that this variation is uncorrelated with a variation in the luminance component between the successive pictures for at least a portion of a display panel on which the pictures are displayed. The variation in the chrominance is indicated by the successive black and white pictures in FIG. 1B. It has been found that such a video sequence can be advantageously applied for testing the quality of a data connection, as will be further described with reference to FIGS. 2 and 3A-3C.

It should be appreciated that various alternatives of the video sequence 1 of FIG. 1B are possible that fall within the scope of the present invention.

As an example, one or more of the P-pictures may be replaced by B-pictures. Furthermore, it is not necessary that the correlation between the variation of the luminance components and chrominance components is absent between each pair of successive pictures. Still further, the video sequence 1 of FIG. 1 may include further I-pictures, since it is sufficient that the variation of the chrominance components of two pictures is uncorrelated with the variation in the luminance components of these two pictures of the sequence for a plurality of pictures. The absence of the correlation results in a picture error on the display panel that displays the video sequence. The absence of further I-pictures in the sequence ensures that a picture error resulting from a packet loss is not erased by such further I-pictures.

FIG. 2 shows a system 10 for testing a data connection 11 capable of transmitting data packets for IPTV. The data connection 11 may be part of a connectionless network, such as the internet. A server 12 comprises a database 13 with one or more video test sequences 1 as depicted in FIG. 1B. The encoded digital video test sequence is provided by an encoder 14 that may be part of the server 12. The server 12 further comprises a processor 15 for replying to requests of clients.

An example of such a client comprises a decoder 20 capable of communicating with the server 12 over the data connection 11. The decoder 20 is further connected to a display apparatus 21 capable of displaying pictures presented to the decoder 20.

It should be appreciated that the system 10 may have a different architecture. For instance, the system may include a broadcasting station (not shown) that transmits a continuous broadcast signal with the video test sequence that can be picked up by the decoder 21.

The operation of the system 10 of FIG. 2 will now be explained with reference to FIGS. 3A-3C.

The video test sequence of FIG. 1B is transmitted over the data connection 11 in several packets. Each picture I, P is built from several packets. The packets generally comprise a header that indicates the type of picture (I or P) and a payload with the display data.

The first picture of FIG. 3A is an I-picture. The picture is built from the display data of several data packets send over the data connection 11. The header of each of the data packets indicates that the packet comprises information for an I-picture, whereas the payload comprises the encoded luminance component Y and chrominance components Cr, Cb for the I-picture. As an example, the I-picture of the video sequence has a luminance component Y=60 and chrominance components Cr=40, Cb=20. A picture with the luminance component and chrominance components will be displayed on the display panel 21, as illustrated

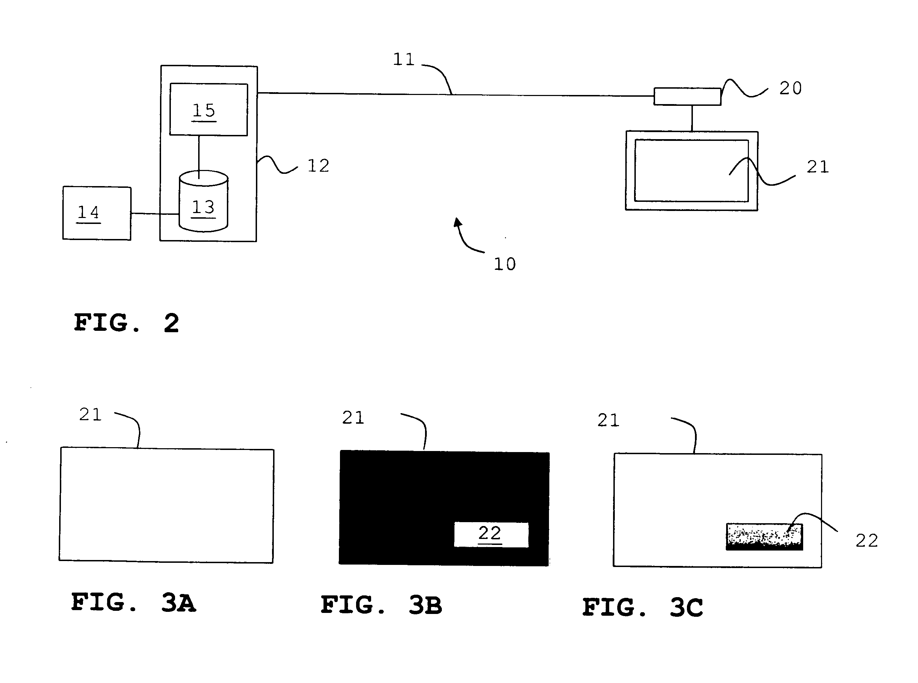

The next picture is a predicted picture P. In order to illustrate the present embodiment of the invention, it is assumed that a packet carrying information of the predicted picture P is lost during transmission over the data connection 11. In the present embodiment of the invention, the variation of the luminance component Y is kept zero, i.e. Y=60 for the P-picture of the video test sequence. However, the chrominance components Cr, Cb of the video test sequence are not correlated to the variation in the luminance component and are set to a significant variation, e.g. Cr=20, Cb=40. As the data packet is lost during transmission, however, the corresponding part 22 on the display panel 21 will remain with Y=60, Cr=40 and Cy=20. The decoder 20 will try to repair the effect of the lost data packet by using the data of the previous I-picture. As the decoder 20 only uses the prediction of the variation of the luminance component Y (which is zero) for further error correction, the block(s) of pixels associated with the lost data packets will simply display the information of the previous I-picture. This is shown in FIG. 3B.

The next picture P in the video sequence has a luminance component Y=60 (static luminance) and chrominance components Cr=40, Cb=20. It is assumed that the data packets for this picture all arrive at the decoder 20. The display panel 21 will display a picture P with a luminance component of Y=60 and chrominance components Cr=40, Cb=20. However, for the part 22 that had an error due to the packet loss, the chrominance components will be different, i.e. Cr=60, Cb=0. Consequently, the packet loss of the preceding picture remains visible, as shown in FIG. 3C.

It should be appreciated that, preferably, the predicted pictures P are free of intra coded information. This avoids that the error part 22 is erased.

Typically, the intra coded picture I and predicted pictures P comprises a plurality of blocks of pixels (macro blocks). In order to ensure hat each data packet loss is detected, it is preferred that a predicted picture P has been established by a prediction of substantially all blocks of a preceding picture I or P. However, whenever loss of a packet influences more than one block of pixels on the display panel 21, it is not necessary that the new picture is established by prediction on the basis of all blocks of the preceding picture.

It will be clear that receiving the video test sequence 1 at the decoder 20 and displaying the sequence on the display panel 21 allows a customer to evaluate the pictures on the display device 21 to observe errors in transmitting packets of the video test sequence 1 over the data connection 11.

Apart from evaluating the quality of the data connection 11 by viewing the effect of packet loss on the display panel 21, it is also possible to extract some quantitative information for the picture on the display panel 21. As an example, if one determines the area of the display panel 21 that displays the pictures incorrectly, this measure provides information on the number of data packets lost. If a customer finds, e.g., that after three hours the display panel of FIG. 3C is displayed on his display panel 21, he may conclude that in the past three hours a single data packet was lost. If he would have found four or such areas, this may indicate that four packets were lost during the measurement period. Of course, if by coincidence the data packets responsible for filling the same part of the display panel are lost, this may not be visible on the display panel 21.

It should be appreciated that the invention is not limited by the embodiment described above. It is the gist of the invention to provide for a video sequence comprising at least two successive predicted pictures, wherein these successive pictures are uncorrelated in space and/or time. The absence of a correlation between the successive pictures prevents the decoder 20 to correct errors resulting from packet loss.

## Claims

1. A digital video test sequence (1) comprising an intra coded picture (I) and a plurality of predicted pictures (P,B) following said intra coded picture, each of said intra coded picture and predicted pictures comprising a luminance component (Y) and two chrominance components (Cr, Cb), wherein a variation in at least one of the chrominance components between at least two successive pictures is uncorrelated with a variation in the luminance component between said successive pictures for at least a portion of a display panel (21) on which said pictures are to be displayed.

2. The video test sequence (1) according to claim 1, wherein the first picture of said test sequence is said intra coded picture (I) and said predicted pictures (P) are free of intra coded information.

3. The video test sequence (1) according to claim 1 or 2, wherein each of said intra coded picture (I) and plurality of predicted pictures (P,B) comprises a plurality of blocks of pixels forming respectively said intra coded pictured and predicted pictures on said display panel and wherein a predicted picture has been established by a prediction of substantially all blocks of a preceding picture.

4. The video test sequence (1) according to one or more of the preceding claims, wherein said variation of said luminance component (Y) is zero and said variation of said chrominance components (Cr,Cb) is non-zero.

5. The video test sequence (1) according claim 4, wherein at least one of said chrominance components (Cr,Cb) of said successive pictures (I,P,B) alternate between two values.

6. A method of testing a digital data connection (11) between a transmitting end (12) and a receiving end (20) of said data connection, said method comprising the steps of:
- transmitting a digital video test sequence (1) over said data connection from said transmitting end to said receiving end of said data connection, wherein said digital video test sequence comprises an intra coded picture (I) and a plurality of predicted pictures (P,B) following said intra coded picture, each of said intra coded picture and predicted pictures comprising a luminance component (Y) and two chrominance components (Cr, Cb), wherein a variation in at least one of the chrominance components between at least two successive pictures is uncorrelated with a variation in the luminance component between said successive pictures for at least a portion of a display panel on which said pictures are to be displayed.

7. The method according to claim 6, wherein said method further comprises the steps of:
- receiving said video test sequence (1) at a receiving end (20) of said data connection;
- having said video test sequence displayed on a display panel (21) at said receiving end, and
- evaluating said pictures on said display panel to observe errors in transmitting of said video test sequence.

8. The method according to claim 7, wherein said method further comprises the step of assessing the area (22) on said display panel (21) on which said pictures (I,P,B) are displayed incorrectly with regard to said variations of said luminance component (Y) and said chrominance components (Cr, Cb) between successive pictures and correlating said area with a number of transmitting errors over said digital data connection.

9. The method according to one or more of the claims 6-8, wherein said digital data connection(11) forms part of a connectionless network.

10. The method according to one or more of the claims 6-8, using a digital video test sequence (1) according to one or more of the claims 2-5.

11. A system (10) arranged for testing a digital data connection (11) between a transmitting end (12) and a receiving end (20) of said data connection, wherein said system is arranged for transmitting a digital video test sequence (1) over said data connection from said transmitting end to said receiving end of said data connection, wherein said digital video test sequence comprises an intra coded picture (I) and a plurality of predicted pictures (P,B) following said intra coded picture, each of said intra coded picture and predicted pictures comprising a luminance component (Y) and two chrominance components (Cr, Cb), wherein a variation in at least one of the chrominance components between at least two successive pictures is uncorrelated with a variation in the luminance component between said successive pictures for at least a portion of a display panel (21) on which said pictures are to be displayed.

12. The system (10) according to claim 11, wherein said system is further arranged for performing the method according to claims 7-10.

13. A broadcast test channel arranged for transmitting the digital video test sequence (1) according to one or more of the claims 1-5 over a network.

14. A server (12) arranged for broadcasting, multicasting and/or unicasting the digital video test sequence (1) according to one or more of the claims 1-5 over a network to a client.

15. An encoder device (14) arranged for composing a digital video test sequence (1) according to one or more of the claims 1-5, wherein a first picture of said sequence is an intra coded picture (I) and all subsequent pictures are predicted pictures (P,B).

16. The encoder device (14) according to claim 15, wherein said encoder device is arranged such that each predicted picture (P,B) is free of intra coded information.
